# EUROPÄISCHE PATENTSCHRIFT

(11) **EP 0 591 234 B1**
(45) Veröffentlichungstag und Bekanntmachung des Hinweises auf die Patenterteilung: **04.09.1996**
(21) Anmeldenummer: 92909979.4
(22) Anmeldetag: 12.05.1992
(51) Int. Cl.: H04L 1/24, H04L 12/26

(54) **VERFAHREN ZUM BESTIMMEN DER ART EINER DATENVERFÄLSCHENDEN STÖRUNG**
PROCESS FOR DETECTING THE NATURE OF DATA-FALSIFYING INTERFERENCE
PROCEDE DE DETERMINATION DU TYPE DE PERTURBATION FALSIFIANT DES DONNEES

(30) Priorität: 26.06.1991 DE 4121481
(43) Veröffentlichungstag der Anmeldung: 13.04.1994
(73) Patentinhaber: SIEMENS AKTIENGESELLSCHAFT, 80333 München (DE)
(72) Erfinder: ARWEILER, Hans-Werner, D-12161 Berlin (DE); WOLF, Andreas, D-12157 Berlin (DE)
(86) Internationale Anmeldenummer: DE9200391
(87) Internationale Veröffentlichungsnummer: WO9300758

(56) Entgegenhaltungen:
- EP-A- 0 094 902
- NTZ Bd. 44, Nr. 8, August 1991, BERLIN,DE; Seiten 548 - 557; WOLF ET AL: 'BITFEHLER-STRUKTURANALYSE IN DER BREITBAND-ISDN-MESSTECHNIK'
- TELCOM REPORT Bd. 14, Nr. 2, März 1991, MUNCHEN,DE; Seiten 104 - 107; WOLF: 'MESSPRAZISION AUF BREITEM BAND'
- ELECTRONICS LETTERS, BD. 26, NR. 6, März 1990, Stevenage, GB; Seiten 363-364; BUTLER ET AL: 'CORRELATION OF INTERFERENCE AND BIT ERROR ACTIVITY IN A DIGITAL TRANSMISSION SYSTEM'

## Beschreibung

Bei heutigen modernen Übertragungssystemen, beispielsweise dem ISDN (Integrated Services Digital Network) - System oder dem Breitband-ISDN (B-ISDN) besteht die Forderung, zur Übertragung von Datenströmen eingerichtete Übertragungsstrecken hinsichtlich ihrer Übertragungseigenschaften und auf das Auftreten von Bitfehlern hin zu untersuchen. Durch äußere, auf die Übertragungsstrecke einwirkende Störeinflüsse verursachte Bitfehler führen zu Verfälschungen des ursprünglich ausgesendeten digitalen Datenstroms und damit zu Störungen bei der Informationsübermittlung.

Der Erfindung liegt die Aufgabe zugrunde, ein Verfahren zum Bestimmen der Art einer Bitfehler verursachenden Störung hinsichtlich ihres stochastischen oder deterministischen Charakters zu schaffen, um in Kenntnis der Bitfehlerart eine effiziente Suche nach dem Ursprungsort und/oder der Ursache der Bitfehler zu ermöglichen.

Diese Aufgabe wird erfindungsgemäß gelöst durch ein Verfahren zum Bestimmen der Art einer datenverfälschenden Störung, die Bitfehler in einem Datenstrom verursacht, der von einer Datenquelle kommend über mindestens eine Übertragungsstrecke einem Datenempfänger zugeführt wird, bei dem datenquellenseitig Testdaten ausgesendet werden, bei dem aus den in den empfangenen Testdaten erkannten Bitfehlern eine Bitfehlerfunktion gewonnen wird, bei dem die Bitfehlerfunktion zur Untersuchung ihrer Periodizität teilstückweise einer Autokorrelation unterzogen wird, wobei die Länge des jeweils autokorrelierten Teilstückes derart bemessen wird, daß es eine Vielzahl, vorzugsweise mindestens 100, von aufgetretenen Bitfehlern enthält, und bei dem die so gewonnene Autokorrelationsfunktion zum Bestimmen einer Störung hinsichtlich ihres stochastischen oder deterministischen Charakters dahingehend untersucht wird, ob sie ein signifikantes Maximum ohne weitere ausgeprägte Maxima (stochastische Störung) oder mehrere Maxima äquidistanter Verteilung (deterministische Störung) zeigt.

Durch Vergleich der empfangenen und gegebenfalls durch Bitfehler verfälschten Testdaten mit den ursprünglichen Testdaten wird eine Bitfehlerfunktion gewonnen, die teilstückweise autokorreliert wird. Die Länge des ausgewerteten Teilstückes ist so bemessen, daß beim Auftreten von Bitfehlern eine Vielzahl von Bitfehlern enthalten sind, so daß die Autokorrelationsfunktion einen eindeutigen Hinweis auf periodisch oder stochastisch auftretende Bitfehler gibt. Der Erfindung liegt also die Erkenntnis zugrunde, daß beim Betrachten eines ausreichend langen Teilstückes der Bitfehlerfunktion eine zuverlässige Aussage über den stochastischen oder deterministischen Charakter der Bitfehler und damit der Störung getroffen werden kann. Stochastische Bitfehler liefern beispielsweise einen Hinweis auf Rauscheinflüsse, so daß in der Übertragungsstrecke enthaltene Sender, Empfänger, Verstärker usw. als Störungsursache zu vermuten sind und entsprechend untersucht werden können. Ein deterministischer Charakter der Bitfehler weist beispielsweise auf periodische Einflüsse (z. B.Netzbrummen) hin. Ein wesentlicher Vorteil des erfindungsgemäßen Verfahrens besteht darin, daß mit verhältnismäßig geringem Aufwand äußerst markante und damit eindeutige Meßergebnisse geliefert werden, die sich besonders leicht auswerten lassen.

Es ist zwar aus der Zeitschrift "Telcom Report" 14 (1991), Heft 2, Seiten 104 - 107 ein Verfahren bekannt, mit dem im Breitbandnetz B-ISDN bei der ATM (Asynchronom Transfer Mode)-Übertragungstechnik mittels Korrelationsfunktionen die Übertragungseigenschaften überwacht werden, jedoch werden bei diesem bekannten Verfahren mit Hilfe von 2⁵-m-Sequenzen sendeseitig codierte Testdaten empfangsseitig unter Verwendung der Information über die angewandte Codiermethode mittels Anwendung der Kreuzkorrelationsfunktion im Decodierer zurückgewandelt. Aus der Höhe des Hauptmaximums der jeweiligen Kreuzkorrelationsfunktion kann auf die Zahl der Bitfehler rückgeschlossen werden; über den Charakter (stochastisch oder deterministisch) der den oder die Bitfehler verursachenden Störung kann eine Auskunft nicht gewonnen werden.

Eine vorteilhafte Weiterbildung des erfindungsgemäßen Verfahrens besteht darin, daß die Bitfehlerfunktion vor ihrer Autokorrelation zur Klassifizierung stückweise in Klassen mit vorgegebener Klassenlänge unterteilt wird. Die klassifizierte Bitfehlerfunktion wird z. B. durch Summation der während der Klassenlänge (vorgegebene Bitanzahl) erkannten Bitfehler und Bereithalten des Summationsergebnisses bis zu Beginn der nächsten Klasse gewonnen. Dadurch wird die zu verarbeitende Datenmenge gegenüber der Bitfehlerfunktion wesentlich reduziert und damit die Anforderungen an die Geschwindigkeit an die folgenden Auswertungsprozesse vermindert.

Eine vorteilhafte Fortbildung des erfindungsgemäßen Verfahrens besteht darin, daß die Bitfehlerfunktion oder die klassifizierte Bitfehlerfunktion ferner einer Fourier-, Laplace- oder Z-Transformation unterzogen wird. Dies ist insbesondere dann vorteilhaft, wenn ein deterministischer Charakter der Störung bestimmt worden ist. Mit Hilfe der Fourier-, Laplace- oder Z-Transformation wird nämlich gegebenenfalls bei einer deterministischen, periodischen Störung die Periode bzw. Frequenz der Störung ermittelt; dadurch sind in vorteilhafter Weise weitere Rückschlüsse auf den Verursacher bzw. Ursprungsort möglich. So ist beispielsweise bei einer entsprechenden Frequenz von 100 Hz (aufgrund des Gleichrichtungseffekts) auf ein Netzbrummen als Fehlerursache zu schließen, wodurch die als mögliche Verursacher in Frage kommenden Elemente der Übertragungsstrecke weiter eingeschränkt werden.

Bei den eingangs erwähnten B-ISDN-Übertragungssystemen besteht der Datenstrom aus aufeinanderfolgenden Datenzellen mit jeweils einem Zellenkopf und einem Zellennutzfeld, der zumindest über eine an die Übertragungsstrecke angeschlossene als Vermittlungsanlage ausgebildete Zwischenstrecke zu dem Datenempfänger gelangt. Der Datenstrom wird datenquellenseitig aus Gründen der Datensicherheit und im Hinblick auf das Übertragungsverhalten der Übertragungsstecke nach einer vorgegebenen Vorschrift mit einer bekannten Periodenlänge verwürfelt und nach Austritt aus der Übertragungsstrecke nach einer entsprechenden Vorschrift entwürfelt. Eine im Hinblick auf dieses Übertragungssystem besonders vorteilhafte Ausgestaltung des erfindungsgemäßen Verfahrens besteht darin, daß die Testdaten in datenquellenseitig gesendete Testzellen eingeschrieben werden, daß aus den empfangenen Testzellen die Bitfehlerfunktion gewonnen wird und daß die Länge des jeweils autokorrellierten Teilstückes der Bitfehlerfunktion um mindestens eine Dekade, vorzugsweise um zwei Dekaden, länger als die bekannte Periodenlänge gewählt wird. Aufgrund der Charakteristiken der eingesetzten Verwürfler bzw. Entwürfler hat es sich als besonders vorteilhaft erwiesen, wenn das jeweils ausgewertete Teilstück der Bitfehlerfunktion vorzugsweise mindestens zwei Dekaden länger als die bekannte Periodenlänge nach der vorgegebenen Vorschrift gewählt wird.

Das erfindungsgemäße Aussenden der Testdaten bzw. Testzellen in den Datenstrom kann bei freigeschaltetem Übertragungssystem dadurch realisiert sein, daß der Datenstrom ausschließlich Testdaten in einer vorgegebenen zeitlichen Folge enthält. Die Testdaten bzw. Testzellen können aber gemäß einer weiteren vorteilhaften Fortbildung des erfindungsgemäßen Verfahrens auch datenquellenseitig in einen Nutzinformationen enthaltenden Datenstrom - während des Betriebs des Übertragungssystems - eingefügt werden, weil davon auszugehen ist, daß die Testdaten denselben äußeren, Bitfehler verursachenden Störeinflüssen wie die Nutzdaten unterliegen. Diese Variante bietet den Vorteil, daß das Übertragungssystem während der Untersuchung normal weiterbetrieben werden kann. Bei Untersuchung eines B-ISDN-Systems ist es besonders vorteilhaft, wenn die Testzellen vorhandene Leerzellen des Nutz-Datenstromes ersetzen.

Eine weitere vorteilhafte Fortbildung des erfindungsgemäßen Verfahrens besteht darin, daß die Maxima der Autokorrelationsfunktion zur Bestimmung einer Bitfehlerrate ausgewertet werden.

Die Erfindung wird nachfolgend anhand einer Zeichnung näher erläutert; es zeigen
- Figur 1: den schematischen Aufbau eines mit dem erfindungsgemäßen Verfahren untersuchten Übertragungssystems,
- Figur 2: einen zellenartig strukturierten Datenstrom in dem Übertragungssystem,
- Figur 3: eine Auswertung der empfangenen Testdaten zur Gewinnung einer Bitfehlerfunktion bzw. klassifizierten Bitfehlerfunktion,
- Figur 4: den grundsätzlichen Ablauf des erfindungsgemäßen Verfahrens und die
- Figuren 5 und 6: eine grafische Darstellung zur Auswertung der Ergebnisse des erfindungsgemäßen Verfahrens.

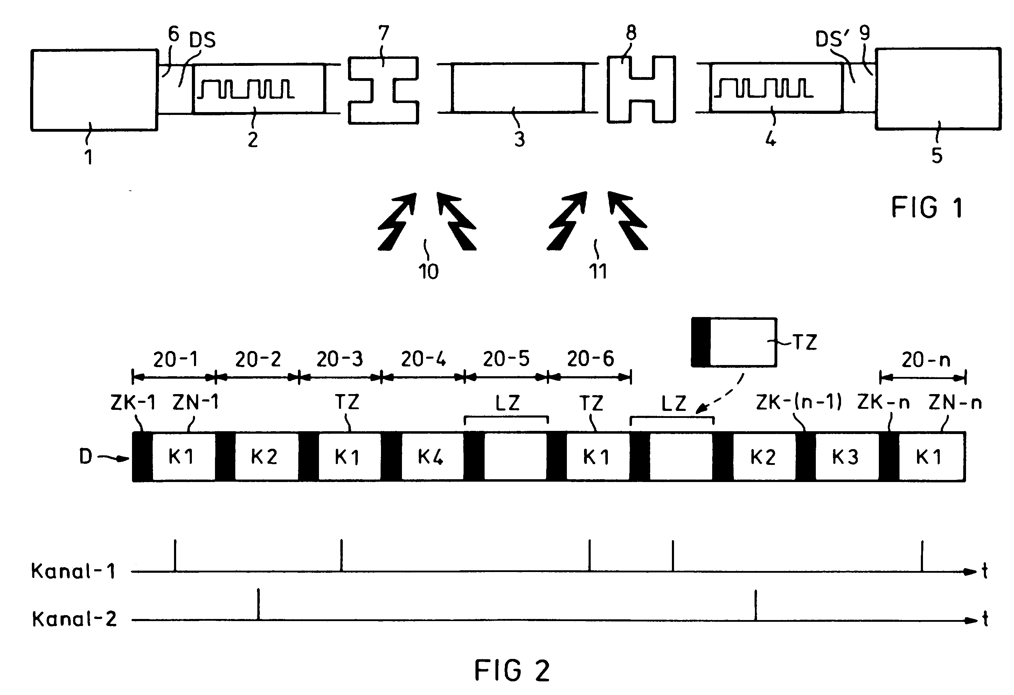

Figur 1 zeigt den grundsätzlichen Aufbau eines Übertragungssystems, beispielsweise eines B-ISDN-Systems. Eine Datenquelle 1 sendet einen Datenstrom DS über eine Übertragungsstrecke 2, eine als Vermittlungsanlage ausgebildete Zwischenstrecke 3 und eine weitere Übertragungsstrecke 4 an einen Datenempfänger 5. Der Datenstrom DS wird datenquellenseitig in einem Verwürfler 6 zur Unlesbarmachung und zur Vermeidung hoher Gleichanteile in dem zu übertragenden Datenstrom verwürfelt und vor Eintritt in die Zwischenstrecke 3 von einem Entwürfler 7 entwürfelt. Nach Verlassen der Zwischenstrecke 3 wird der Datenstrom DS in einem weiteren Verwürfler 8 vor Eintritt in die weitere Übertragungsstrecke 4 erneut verwürfelt und durch einen empfängerseitigen Entwürfler 9 anschließend entwürfelt. Auf die Ubertragungsstrecken 2 und 4 bzw. die Zwischenstrecke 3 einwirkende stochastische (zufällige) Störungen 10 und deterministische (regelmäßige) Störungen 11 sind durch Pfeile angedeutet und führen zu einem verfälschten Datenstrom DS'. Bei der weiteren Betrachtung wird davon ausgegangen, daß in dem Übertragungssystem bereits eine Verbindung (Kanal-1) zwischen der Datenquelle 1 und dem Datenempfänger 5 von der Vermittlungsanlage 3 eingerichtet worden ist. Die Vermittlungsanlage 3 kann in gleicher Weise gleichzeitig weitere Verbindungen (Kanäle) zwischen weiteren nicht dargestellten Datenquellen und Datenempfängern herstellen.

Figur 2 zeigt einen über die Vermittlungsanlage 3 fließenden Datenstrom D, der aus einer Vielzahl von Datenzellen 20-1 ... 20-n besteht. Jede Datenzelle, z. B. 20-1, besteht aus einem Zellenkopf ZK-1 und einem Zellennutzfeld ZN-1. In dem Datenstrom D sind neben den mit K1 bezeichneten, dem Kanal-1 zwischen der Datenquelle 1 und dem Datenempfänger 5 zugeordneten (also den Datenstrom DS gemäß Figur 1 bildenden) Datenzellen 20-1, 20-2. 20-6 und 20-n weitere, anderen Kanälen zugeordnete Datenzellen enthalten. So sind beispielsweise die mit K2 bezeichneten Datenzellen (z. B. 20-2) einem Kanal-2 zugeordnet. Der Datenstrom D enthält ferner Leerzellen LZ zum Ausgleich unterschiedlicher Datenübertragungsraten.

Der Datenstrom DS ist entweder nur aus Testzellen TZ (z. B. Datenzellen 20-3 und 20-6) oder aus in Leerzellen LZ (Figur 2) eingefügte Testzellen TZ und im übrigen aus Nutzzellen (z. B. 20-1) und Leerzellen gebildet.

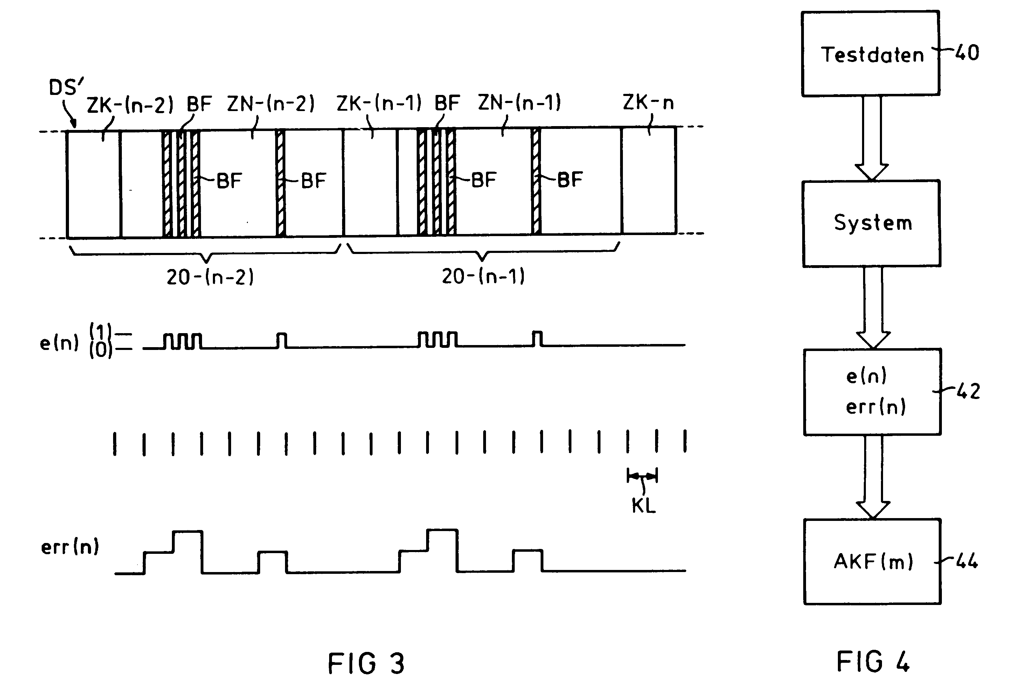

Figur 3 zeigt in der ersten Zeile in schematischer Darstellung einen Ausschnitt mit als Testzellen dienenden Datenzellen 20-(n-2) und 20-(n-1) des zellenweise strukturierten empfangenen Datenstroms DS'. In den jeweiligen Zellennutzfeldern ZN-(n-2) und ZN-(n-1) sind jeweils durch Schraffur angedeutete Bitfehler BF enthalten. Derartige Bitfehler BF können auch in den jeweiligen Zellenköpfen ZK-(n-2) bzw. ZK-(n-1) enthalten sein.

In der zweiten Zeile der Figur 3 ist eine unipolare Bitfehlerfunktion e(n) dargestellt, die aus einem Vergleich der empfangenen Testdatenzellen 20-(n-2) und 20-(n-1) mit den ursprünglich von der Datenquelle 1 ausgegebenen Testdatenzellen gewonnen wird. Dazu wird jedem korrekt übertragenen Bit der Wert Null (0) und jedem fehlerhaft übertragenen Bit der Wert Eins (1) zugeordnet. Die dritte Zeile der Figur 3 zeigt eine Klasseneinteilung mit einer jeweiligen Klassenlänge (Bitlänge) KL. In der vierten Zeile der Figur 3 ist eine klassifizierte Bitfehlerfunktion err(n) durch Zusammenfassen der innerhalb einer Klassenlänge KL detektierten Bitfehler BF der Bitfehlerfunktion e(n) gezeigt. Die innerhalb einer Klassenlänge KL auftretenden Bitfehler werden summiert und das Summationsergebnis während der Klassenlänge KL beibehalten.

Obwohl Figur 3 die Bitfehlerfunktion e(n) bzw. die klassifizierte Bitfehlerfunktion err(n) nur für zwei aufeinanderfolgende Datenzellen darstellt, werden tatsächlich eine Vielzahl von Datenzellen ausgewertet. Vorzugsweise wird ein Teilstück der Bitfehlerfunktion e(n) bzw. der klassifizierten Bitfehlerfunktion err(n) mit einer derartigen Teillänge gleichzeitig ausgewertet, daß mindestens 100 Bitfehler enthalten sind. Als besonders vorteilhaft hat es sich erwiesen, wenn bei einem Übertragungssystem mit einem Verwürfler 6, 8 bzw. Entwürfler 7, 9 (Figur 1) die Länge der Bitfehlerfunktion mindestens das Zehn-, vorzugsweise das Hundertfache, der Periode der Verwürfler- bzw. Entwürflervorschrift aufweist.

Eine mögliche Erzeugung einer klassifizierten Bitfehlerfunktion err(n) ist auch durch eine Kreuzkorrelation der in dem jeweiligen Zellennutzfeld enthaltenen übertragenen Daten mit den bekannten Testdaten und Berücksichtigung im Zellenkopf aufgetretener Bitfehler möglich. Das Maximum der Kreuzkorrelationsfunktion nimmt mit zunehmender Bitfehlerzahl pro Datenzelle ab, so daß das Maximum bereits eine klassifizierte - wobei die Klassenlänge der (Nutz-) Datenzellenlänge entspricht - Bitfehlerfunktion liefert. Diese Möglichkeit der Ermittlung der klassifizierten Bitfehlerfunktion ist in der WO 91/16777 (veröffentlicht am 31.10.1991) beschrieben. Eine Ermittlung der im Zellenkopf aufgetretenen Bitfehler kann beispielsweise anhand eines in dem Zellenkopf enthaltenen und aus dem Inhalt des Zellenkopfes abgeleiteten Kontrollwortes (z. B. aus den ersten vier Byte des Zellenkopfes) erfolgen. Diese Auswertung und Korrektur des Zellenkopfes ist beispielsweise in der CCITT (Comité Consultatif International de Télégraphique et Téléphonique)-Correction 1990, Seiten 134 bis 137 beschrieben.

Figur 4 zeigt den grundsätzlichen Ablauf des erfindungsgemäßen Verfahrens, bei dem in einem ersten Verfahrensschritt 40 wie bereits ausführlich erläutert Testdaten in den Datenstrom DS eingefügt werden bzw. den Datenstrom selbst bilden. Das zu untersuchende System wird mit den Testdaten beaufschlagt, die den gleichen Störeinflüssen unterliegen wie die zu übertragenden Nutzdaten. Aus den in den empfangenen Testdaten enthaltenen, durch Vergleich mit den ursprünglich gesendeten Testdaten bestimmten Bitfehlern wird die Bitfehlerfunktion e(n) in einem zweiten Verfahrensschritt 42 ermittelt. In einem dritten Verfahrensschritt 44 wird die Bitfehlerfunktion e(n) bzw. die klassifizierte Bitfehlerfunktion err(n) einer Autokorrelation unterworfen.

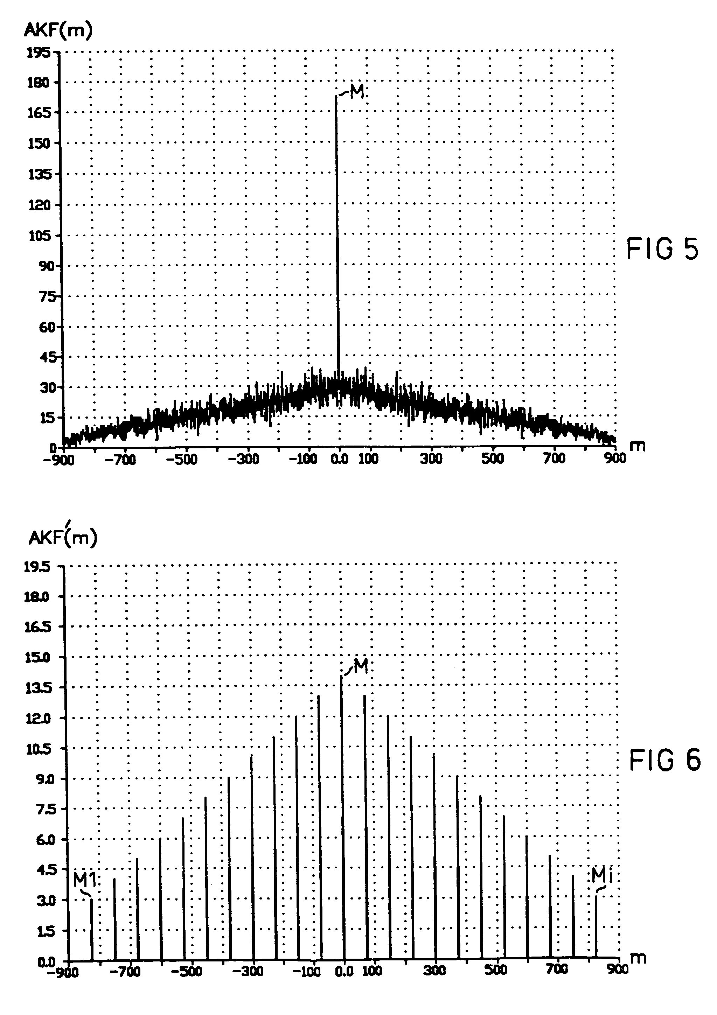

Das Ergebnis der Autokorrelation ist in Form von der Autokorrelationsfunktion AKF(m) in den Figuren 5 und 6 dargestellt. Figur 5 zeigt eine Autokorrelationsfunktion AKF(m) mit einem signifikanten Maximum M bei m=0 und ohne weitere ausgeprägte Maxima. Dies läßt auf den Einfluß eines weißen Rauschens und damit auf eine stochastische Störung 10 (Figur 1) auf eine Übertragungsstrecke schließen. Als mögliche Fehlerursachen und damit entsprechend als mögliche Fehlerorte kommen beispielsweise die in der Übertragungsstrecke enthaltenen optischen oder elektrischen Sender bzw. Empfänger, Verstärker usw. in Frage, deren Rauschverhalten anschließend zu überprüfen wäre. Die Höhe des Maximums M ist ein Maß für die Bitfehlerrate (Bitfehleranzahl pro ausgewertetem Teilstück des Datenstromes) und ermöglicht bei einer unipolaren, binären Bitfehlerfunktion (ggf. bei Normierung) eine einfache Bestimmung der Bitfehleranzahl im korrelierten Teilstück; im vorliegenden Beispiel beträgt die Anzahl ca. 172, sofern die unipolare, binäre Bitfehlerfunktion e(n) direkt autokorreliert worden ist.

Figur 6 zeigt dagegen eine Autokorrelationsfunktion AKF'(m) mit mehreren Maxima M1 ... Mi. Ein Hauptmaximum M liegt ebenfalls bei m=0. Eine derartige äquidistante Verteilung der Maxima läßt nicht nur auf Bitfehler aufgrund einer deterministischen, sondern auch periodischen Störung schließen. Zur genaueren Untersuchung wird die Bitfehlerfunktion e(n) bzw. die klassifizierte Bitfehlerfunktion err(n) einer schnellen Fouriertransformation (FFT), einer Laplace- oder Z-Transformation unterzogen und damit die Periodizität der Bitfehler exakt bestimmt. Die Periodizität bzw. die Frequenz läßt dann einen Rückschluß auf den Verursacher des deterministischen Störeinflusses und damit in der Regel auch auf den Fehlerort zu.

## Patentansprüche

1. Verfahren zum Bestimmen der Art einer datenverfälschenden Störung (10, 11), die Bitfehler (BF) in einem Datenstrom (DS') verursacht, der von einer Datenquelle (1) kommend über mindestens eine Übertragungsstrecke (4) einem Datenempfänger (5) zugeführt wird,
bei dem datenquellenseitig Testdaten ausgesendet werden, bei dem aus den in den empfangenen Testdaten erkannten Bitfehlern (BF) eine Bitfehlerfunktion (e(n)) gewonnen wird, bei dem die Bitfehlerfunktion (e(n) zur Untersuchung ihrer Periodizität teilstückweise einer Autokorrelation unterzogen wird, wobei die Länge des jeweils autokorrelierten Teilstückes derart bemessen wird, daß es eine Vielzahl, vorzugsweise mindestens 100, von aufgetretenen Bitfehlern (BF) enthält, und bei dem die so gewonnene Autokorrelationsfunktion (AKF(m)) zum Bestimmen einer Störung hinsichtlich ihres stochastischen oder deterministischen Charakters dahingehend untersucht wird, ob sie ein signifikantes Maximum ohne weitere ausgeprägte Maxima (stochastische Störung) oder mehrere Maxima äquidistanter Verteilung (deterministische Störung) zeigt.

2. Verfahren nach Anspruch 1, **dadurch gekennzeichnet**, daß die Bitfehlerfunktion (e(n)) vor ihrer Autokorrelation zur Klassifizierung stückweise in Klassen mit vorgegebener Klassenlänge (KL) zusammengefaßt wird.

3. Verfahren nach Anspruch 1 oder 2, **dadurch gekennzeichnet**, daß die Bitfehlerfunktion (e(n)) oder die klassifizierte Bitfehlerfunktion (err(n)) ferner einer Fourier-, Laplace- oder Z-Transformation unterzogen wird.

4. Verfahren nach einem der vorangehenden Ansprüche, wobei der Datenstrom (DS) aus aufeinanderfolgenden Datenzellen (K1) mit jeweils einem Zellenkopf (ZK-1 ... ZK-n) und einem Zellennutzfeld (ZN-1 ... ZN-n) besteht und vor Eintritt in die Übertragungsstrecke (4) nach einer vorgegebenen Vorschrift mit bekannter Periodenlänge (N_{V}) verwürfelt und nach Austritt aus der Übertragungsstrecke (4) nach einer entsprechenden Vorschrift entwürfelt wird, **dadurch gekennzeichnet**, daß die Testdaten in datenquellenseitig gesendete Testzellen (TZ) eingeschrieben werden, daß aus den empfangenen Testzellen (TZ) die Bitfehlerfunktion (e(n)) gewonnen wird und daß die Länge des jeweils autokorrelierten Teilstückes der Bitfehlerfunktion (e(n)) um mindestens eine Dekade länger als die bekannte Periodenlänge (N_{V}) gewählt wird.

5. Verfahren nach einem der vorangehenden Ansprüche, **dadurch gekennzeichnet**, daß die Testdaten bzw. Testzellen (TZ) datenquellenseitig in einen außerdem Nutzinformationen enthaltenden Datenstrom (DS) eingefügt werden.

6. Verfahren nach einem der vorangehenden Ansprüche, **dadurch gekennzeichnet**, daß die Maxima (M, M1, Mi) der Autokorrelationsfunktion (AKF(m)) zur Bestimmung einer Bitfehlerrate ausgewertet werden.

## Claims

1. Method for determining the type of a data-falsifying disturbance (10, 11) causing bit errors (BF) in a data stream (DS') that is supplied from a data source (1) to a data receiver (5) by way of at least one transmission link (4), in which test data are transmitted on the data source side, in which a bit error function (e(n)) is obtained from the bit errors (BF) identified in the test data received, in which, in order to check its periodicity, the bit error function (e(n)) is subjected piece by piece to an autocorrelation, wherein the length of the respective autocorrelated piece is such that it contains a multiplicity of bit errors (BF), preferably at least 100, that have occurred, and in which, for identifying a disturbance in respect of its stochastic or deterministic nature, the autocorrelation function (AKF(m)) obtained in this way is examined in order to determine whether it exhibits a significant maximum without further distinctive maxima (stochastic interference), or several maxima distributed at equal distances (deterministic interference).

2. Method according to claim 1, **characterised in that**, for classification, before it is autocorrelated, the bit error function (e(n)) is put together piece by piece into classes having a pre-determined class length (KL).

3. Method according to claim 1 or 2, **characterised in that** the bit error function (e(n)) or the classified bit error function (err(n)) is further subjected to a Fourier, Laplace or Z transformation.

4. Method according to one of the preceding claims, wherein the data stream (DS) consists of successive data cells (K1) each having a cell header (ZK-1 ... ZK-n) and a useful cell field (ZN-1 ... ZN-n), and, before entering the transmission link (4), is scrambled in accordance with a pre-determined specification having a known period length (Nᵥ) and, after leaving the transmission link (4), is unscrambled in accordance with a corresponding specification, **characterised in that** the test data are input into test cells (TZ) transmitted on the data source side, in that the bit error function ((e(n)) is obtained from the received test cells (TZ), and in that the length of the respective autocorrelated piece of the bit error function (e(n)) is selected so that it is at least one decade longer than the known period length (Nᵥ).

5. Method according to one of the preceding claims, **characterised in that** the respective test data and test cells (TZ) can be inserted, on the data source side, into a data stream (DS) further containing useful information.

6. Method according to one of the preceding claims, **characterised in that** the maxima (M, M1, Mi) of the autocorrelation function (AKF(m)) are evaluated for determining a bit error rate.

## Revendications

1. Procédé de détermination du type d'une perturbation (10, 11) faussant des données et provoquant des erreurs (BF) de bits dans un flux (DS') de données, que l'on envoie d'une source (1) de données à un récepteur (5) de données par l'intermédiaire d'au moins une voie (4) de transmission,
dans lequel on émet, du côté de la source de données, des données d'essai dans lequel on obtient à partir des erreurs (BF) de bits reconnues dans les données d'essai reçues une fonction (e(n)) d'erreur de bit, dans lequel on soumet la fonction (e(n)) d'erreur de bit, pour rechercher sa périodicité, par morceaux, à une autocorrélation, la longueur du tronçon ayant subi l'autocorrélation étant telle qu'elle comprend une multiplicité, de préférence au moins 100, d'erreurs (BF) de bits apparues et dans lequel on recherche dans la fonction (AKF(m)) d'autocorrélation ainsi obtenue pour déterminer le caractère stochastique ou déterministe d'une perturbation, si elle présente un maximum significatif sans autres maxima prononcés (perturbation stochastique) ou plusieurs maxima répartis de manière équidistante (perturbation déterministe).

2. Procédé suivant la revendication 1,
caractérisé en ce que l'on rassemble la fonction (e(n)) d'erreur de bit, avant son autocorrélation, pour le classement par tronçon dans des classes ayant une longueur (KL) prescrite.

3. Procédé suivant la revendication 1 ou 2,
caractérisé en ce que l'on soumet la fonction (e(n)) d'erreur de bit ou la fonction (err(n)) d'erreur de bit classée en plus à une transformée de Fourier, de Laplace ou en Z.

4. Procédé suivant l'une des revendications précédentes, dans lequel le flux (DS) de données est constitué de cellules (K1) de données successives comportant chacune un en-tête (ZK-1 ... ZK-n) de cellules et un champ utile (ZN-1 ... ZN-n) de cellules, on l'embrouille avant son entrée dans la voie (4) de transmission suivant une règle prescrite de longueur (Nᵥ) connue de période et on le désembrouille après sa sortie de la voie (4) de transmission suivant une règle correspondante, caractérisé en ce que l'on insère les données d'essai dans des cellules (TZ) d'essai émises du côté de la source de données, on obtient à partir des cellules (TZ) d'essai reçues la fonction (e(n)) d'erreur de bit et on choisit la longueur du tronçon, ayant subi l'autocorrélation, de la fonction (e(n)) d'erreur de bit plus longue d'au moins une décade que la longueur connue (Nᵥ) de période.

5. Procédé suivant l'une des revendications précédentes,
caractérisé en ce que l'on introduit les données d'essai ou cellules d'essai (TZ) du côté de la source de données dans un flux (DS) de données comprenant en outre des informations utiles.

6. Procédé suivant l'une des revendications précédentes,
caractérisé en ce que l'on exploite les maxima (M, M1, Mi) de la fonction (AKF(m)) d'autocorrélation pour déterminer un taux d'erreur de bit.
